# EUROPÄISCHE PATENTSCHRIFT

(11) **EP 3 236 877 B1**
(45) Veröffentlichungstag und Bekanntmachung des Hinweises auf die Patenterteilung: **01.04.2020**
(21) Anmeldenummer: 15807598.6
(22) Anmeldetag: 22.11.2015
(51) Int. Cl.: A61C 8/00

(54) **ANORDNUNG UMFASSEND EIN IMPLANTAT UND VERFAHREN**
ARRANGEMENT COMPRISING AN IMPLANT AND METHOD
ENSEMBLE COMPRENANT UN IMPLANT ET PROCÉDÉ

(30) Priorität: 22.12.2014 DE 102014018925; 12.05.2015 DE 102015005938
(43) Veröffentlichungstag der Anmeldung: 01.11.2017
(73) Patentinhaber: Champions-Implants GmbH, 55237 Flonheim (DE)
(72) Erfinder: NEDJAT, Armin, 55237 Flonheim (DE)
(74) Vertreter: Eickmeyer, Dietmar
(86) Internationale Anmeldenummer: PCT/EP2015/002338
(87) Internationale Veröffentlichungsnummer: WO 2016/102037

(56) Entgegenhaltungen:
- WO-A1-01/62180
- WO-A1-2012/084896
- DE-T2-602004 010 622
- DE-U1-202013 006 276
- US-A1- 2010 145 393
- US-A1- 2014 302 459
- Diener electronic GmbH + Co. KG: "Plasma in der Zahntechnik/Zahnmedizin - Chair Side Plasma Reinigung", , 11. November 2014 (2014-11-11), Seite 3 pp., XP054976511, Gefunden im Internet: URL:https://www.youtube.com/watch?v=VvOs8m KyPoM [gefunden am 2016-05-03]

## Beschreibung

Die Erfindung betrifft eine Anordnung umfassend ein Implantat und ein Verfahren zur Behandlung eines Implantats.

Aus den DE 103 34 366 A1, DE 103 04 802 A1und CH 702 586 A2 sind bereits Implantate bekannt. Zur Verankerung von Zahnersatz in einem Kieferknochen kann ein Implantat verwendet werden, wenn keine natürliche Zahnwurzel mehr vorhanden ist. Ein solches Implantat ist in der DE 20 2014 004 751 U1 beschrieben. Dieses Implantat weist einen Verankerungsabschnitt und einen Implantatstumpf auf. Der Verankerungsabschnitt umfasst einen Kern, von dem Verankerungskrallen abragen, was auch aus der WO 2012 084896 A1 bekannt geworden ist. Der Implantatstumpf ist derart ausgestaltet, dass er ein Aufsetzteil aufnehmen kann. Ein Aufsetzteil kann als Basis für zahnmedizinische Suprakonstruktionen wie beispielsweise künstliche Zähne, Brücken oder abnehmbare Zahnprothesen dienen. Vor diesem Hintergrund ist es bekannt, sogenannte Abutments als Aufsetzteile zu verwenden. Der englische Begriff Abutment steht für Stützpfeiler und ist ein Begriff aus der Zahnmedizin. Mit dem Begriff Abutment bezeichnet der Fachmann ein Verbindungsteil zwischen einem Implantat und einem künstlichen Zahn.

Aus der DE 20 2008 007189 U1 sind bereits Abutments bekannt, welche auf ein einteiliges Implantat aufgeschoben werden können. Konkret wird ein Abutment als Aufsetzteil auf einen aus der Mundschleimhaut herausragenden Implantatstumpf aufgebracht. Auch in der DE 60 2004 010622 T2 ist ein einteiliges Implantat offenbart, welches leicht herzustellen ist sowie eine gute Biokompatibilität und eine hohe Festigkeit hat.

Das in der DE 20 2014 004 751 U1 beschriebene Implantat ist aus Polyetheretherketon gefertigt. Polyetheretherketon eignet sich als Kunststoff zur Verwendung in Implantaten.

Zum einen ist das Implantat mittels eines Kunststoffformgebungsverfahrens, insbesondere mittels eines Spritzgussverfahrens herstellbar, zum anderen vermag das Implantat aus Polyetheretherketon gut einzuheilen. Auch aus der US 2010145393 ist ein Implantat mit einem Implantatstumpf bekannt geworden, welches aus einem Kunststoff gefertigt ist oder einen Kunststoff aufweist.

Das Implantat kann jedoch aufgrund seiner Materialeigenschaften für manche spezielle Anwendungen in seinem Kopfbereich etwas zu elastisch sein. Konkret kann das Implantat in dem Bereich, der aus dem Kieferknochen austritt, nicht immer eine ausreichende Stabilität gegen Deformierungen, insbesondere gegen Verbiegungen zeigen.

Aus der US 2014 0302459 ist ein Verfahren zur Zahnwiederherstellung bekannt geworden, bei dem während der Behandlung des Patienten insbesondere die direkte Modifikation beziehungsweise Anpassung eines Abutments, das kein Titan enthält, vorgestellt wird. Auch der allgemeine Einsatz von Plasma in der Zahntechnik und Zahnmedizin sowie die Plasmareinigung sind durch die Firma Diener electronic GmbH&Co.KG bekannt geworden.

Der Erfindung liegt daher die Aufgabe zugrunde, ein Implantat, welches aus einem Kunststoff gefertigt ist oder einen Kunststoff aufweist, insgesamt zu stabilisieren und nach der Implantierung eine Rotation des Implantats relativ zum Kieferkochen zu verhindern.

Die vorliegende Erfindung löst die zuvor genannte Aufgabe durch die Anordnung gemäß Anspruch 1.

Die erfindungsgemäße Anordnung umfasst ein Implantat, welches aus einem Kunststoff gefertigt ist oder einen Kunststoff aufweist, das Implantat umfasst einen Verankerungsabschnitt und einen Implantatstumpf, wobei der Verankerungsabschnitt einen Kern aufweist, wobei vom Kern in radialer und/ oder axialer Richtung Verankerungskrallen abragen und wobei der Kern im Querschnitt elliptisch oder oval ausgebildet ist.

Erfindungsgemäß ist erkannt worden, dass ein im Querschnitt elliptischer oder ovaler Kern ein Implantat, welches aus einem Kunststoff gefertigt ist, oder einen Kunststoff aufweist, nach einer Implantierung insgesamt stabilisiert. Der elliptische oder ovale Kern verhindert eine Rotation relativ zu einem Kieferknochen.

Eine Behandlung mit Plasma bewirkt eine Aktivierung der Oberfläche zumindest des Verankerungsabschnitts, so dass dieser besser einheilen kann und durch die Einheilung im Kieferknochen stabilisiert ist.

Insoweit bewirken sowohl die geometrische Ausgestaltung des Kerns als auch die Behandlung mit Plasma eine Stabilisierung des Implantats nach dessen Implantierung.

Der Implantatstumpf ist im Querschnitt elliptisch oder oval ausgebildet. Der Implantatstumpf könnte durch ein Plasma behandelt sein. Ein elliptischer oder ovaler Implantatstumpf verhindert, dass ein Aufsetzteil In unerwünschter Weise rotiert wird. Die Behandlung mit Plasma erlaubt eine feste stoffschlüssige Verbindung der Oberfläche des Implantatstumpfs mit einem Zement.

Vor diesem Hintergrund ist der Kern elliptisch ausgebildet, wobei der größte Durchmesser im Bereich 3 bis 9 mm und der kleinste Durchmesser im Bereich 2 bis 6 mm liegen kann. Durch die Wahl dieser Durchmesser sitzt das Implantat besonders rotationssicher.

Das Implantat könnte aus Polyetheretherketon gefertigt sein. Polyetheretherketon eignet sich als Kunststoff zur Verwendung in Implantaten. Zum einen ist das Implantat mittels eines Kunststoffformgebungsverfahrens, insbesondere mittels eines Spritzgussverfahrens herstellbar, zum anderen vermag das Implantat aus Polyetheretherketon gut einzuheilen.

Erfindungsgemäß ist erkannt worden. dass ein Implantat, welches aus einem Kunststoff gefertigt ist oder einen Kunststoff aufweist, oberhalb des Austritts aus einem Kieferknochen nicht steif genug sein kann. Darauf ist erkannt worden, dass das Implantat eine Versteifung in diesem kritischen Bereich erfahren muss. Schließlich ist erkannt worden, dass die Versteifung durch eine Kombination aus einem Implantat und einem Aufsetzteil erreicht werden kann, welches auf den Implantatstumpf aufgebracht wird. Das Aufsetzteil ist erfindungsgemäß aus einem derart harten und unelastischen Werkstoff gefertigt, der eine ausreichende Versteifung des Implantats sicher stellt. Erfindungsgemäß ist das Aufsetzteil derart mit dem Implantatstumpf verbunden oder verbindbar, dass dieses bis knapp über dem Kieferknochen fixiert ist. Hierbei ist das Aufsetzteil aus einem Werkstoff gefertigt oder weist einen Werkstoff auf, welcher biegesteifer als der Kunststoff ist, aus dem der Implantatstumpf gefertigt ist oder den der Implantatstumpf aufweist. Hierdurch wird ein Implantat, welches aus einem Kunststoff gefertigt ist oder einen Kunststoff aufweist, zumindest in einem Kopfbereich stabilisiert, der nach einer Implantierung des Implantats aus dem Kieferknochen herausragen wird.

Der Werkstoff, aus dem das Aufsetzteil gefertigt ist oder den das Aufsetzteil aufweist, könnte ein Werkstoff auf Basis anorganischer Materialien sein. Das Aufsetzteil im Gegensatz zum Implantat oder Implantatstumpf, welche einen Werkstoff auf Basis organischer Materialien aufweisen, anorganisch. Hierdurch kann das Aufsetzteil besonders gut den Implantatstumpf stabilisieren.

Der Werkstoff, aus dem das Aufsetzteil gefertigt ist oder den das Aufsetzteil aufweist, konnte ein Metall oder eine Metalllegierung sein. Metalle sind duktil und gut bearbeitbar. Hierbei ist konkret denkbar, dass Metalle wie Titan eingesetzt werden, wenn der Patient eine Allergie gegen andere Metalle zeigt.

Der Werkstoff, aus dem das Aufsetzteil gefertigt ist oder den das Aufsetzteil aufweist, konnte eine Keramik sein. Keramiken sind besonders hart und biegesteif. Hierbei ist konkret denkbar, dass die Keramik als Glaskeramik oder Oxidkeramik ausgestaltet ist. Keramiken haben sich in der Zahnmedizin insbesondere aus optischen Gründen bewährt.

Der Werkstoff. aus dem das Aufsetzteil gefertigt ist oder den das Aufsetzteil aufweist, konnte ein Zirkonoxid sein. Zirkonoxid oder auch Zirkoniumdioxid ist diamagnetisch und gegen Säuren und Alkalilaugen sehr stabil. Dieser nichtmetallische und anorganische Werkstoff ist besonders widerstandsfähig gegen chemische, thermische und mechanische Einflüsse.

Das Aufsetzteil könnte durch einen Klebstoff mit dem Implantatstumpf verbunden sein. Hierdurch geht das Aufsetzteil eine stoffschlüssige Verbindung mit dem Implantatstumpf ein. Durch Verwendung eines geeigneten Klebstoffs wird das Aufsetzteil auf dem Implantatstumpf zementiert.

Das Aufsetzteil ist mit dem Implantatstumpf formschlüssig verbunden. Hierdurch ist sicher gestellt, dass das Aufsetzteil nicht relativ zum Implantatstumpf verdrehbar ist. Vor diesem Hintergrund weist das Aufsetzteil Nocken auf, die in Nuten des Implantatstumpfs formschlüssig eingreifen. Es können zwei, drei, vier oder noch mehr Nocken vorgesehen sein. Durch des Vorsehen mehrerer Nocken wird die Last auf einen einzelnen Nocken beim Belasten des Aufsetzteils verteilt.

Vor diesem Hintergrund ist ebenso denkbar, dass Nocken, die an einem Implantatstumpf ausgebildet sind, in Nuten oder andere Ausnehmungen im Aufsetzteil eingreifen.

Das Aufsetzteil könnte mit dem Implantatstumpf verschraubt sein. Durch diese formschlüssige Verbindung kann die Höhe, mit welcher das Aufsetzteil vom Kieferknochen in den Mundraum abragt, sehr leicht eingestellt werden.

Das Aufsetzteil könnte einen Durchgang aufweisen. Bevorzugt erstreckt sich der Durchgang von einer oberen Öffnung des Aufsetzteils zu einer unteren Öffnung, in welche der Implantatstumpf eingeführt wird. Die untere Öffnung ist durch den Implantatstumpf verschlossen, so dass kein Klebstoff in den Kieferknochen fließen kann. Durch die obere Öffnung des Durchgangs kann der Klebstoff oral abfließen. Unter Klebstoff wird insbesondere Zement verstanden.

Das Implantat könnte materialeinheitlich und einstückig ausgebildet sein, nämlich der Implantatstumpf und ein Verankerungsabschnitt könnten aus dem gleichen Kunststoff gefertigt sein. Hierdurch lässt sich das Implantat kostengünstig fertigen und ist sortenrein.

Das Implantat könnte mindestens eine Markierung aufweisen, welche anzeigt, wie weit das Implantat in den Kieferknochen eingebracht werden soll oder wie tief der Implantatstumpf in das Aufsetzteil hineinragen soll. Durch die zuvor genannten Markierungen wird sichergestellt, dass ein Aufsetzteil beispielsweise 0,3 mm oberhalb des Kieferknochens fixiert ist und in dieser Höhe fasst bzw. greift. Das Aufsetzteil wird knapp über dem Kieferknochen fixiert und stabilisiert dabei den Implantatstumpf in ausreichender Weise. indem es diesen übergreift.

Das Implantat könnte einen Verankerungsabschnitt mit einem Kern aufweisen, welcher einen Durchmesser D im Bereich von 2 mm bis 9 mm hat. Der Kern ist oval oder elliptisch ausgebildet. Der zuvor genannte Durchmesser ist im Falle einer konischen oder andersartigen Ausgestaltung der jeweils größte Durchmesser des Kerns. Der Durchmesser kann geeignet gewählt werden, je nachdem, ob das Implantat in den Unterkiefer oder in den Oberkiefer implantiert werden soll.

Ein Aufsetzteil kann als Basis für zahnmedizinische Suprakonstruktionen wie beispielsweise künstliche Zahne, Brücken oder abnehmbare Zahnprothesen dienen. Im Sinne dieser 8eschreibung kann ein Aufsetzteil aber auch als künstlicher Zahn oder Zahnersatz selbst ausgestaltet sein.

Die hier beschriebene Anordnung könnte ein erfindungsgemäßes Implantat der nachfolgend beschriebenen Art umfassen.

Die vorliegende Erfindung löst die zuvor genannte Aufgabe durch die Merkmale des Patentanspruchs 16.

Vor diesem Hintergrund umfasst ein erfindungsgemäßes Verfahren zur Behandlung eines Implantats einer Anordnung nach Anspruch 1 die folgenden Verfahrensschritte:
Bereitstellen eines transportablen Plasmageräts,
Verbringen des zu aktivierenden Implantats vor eine Düse des Plasmageräts,
wobei das Implantat von einem nicht metallischen Gegenstand gehalten wird, und
Benetzen des Implantats mit Plasma.

Erfindungsgemäß ist zunächst erkannt worden, dass eine Osseointegration eines Implantats aus Polyetheretherketon optimiert und beschleunigt werden kann, indem die Oberflächenenergie der Oberfläche des Implantats erhöht wird. Die Oberfläche eines Implantats aus Polyetheretherketon ist Üblicherweise hydrophob. Durch eine Behandlung der Oberfläche mit Plasma wird die Oberfläche hydrophil ausgestaltet. Hierdurch wird eine Anlagerung von Osteoblasten an die Oberfläche stark begünstigt. Die Oberfläche des Implantats kann durch körpereigene Stoffe wie Blut oder andere Flüssigkeiten besser benetzt werden. So wird ein Heilungsprozess gefördert und beschleunigt.

Weiter ist erkannt worden, dass Geräts, welche Plasma erzeugen, häufig relativ groß sind und in eigens dafür ausgelegten Laboren betrieben werden. Hierzu sind Prozessgasanschlüsse und Prozessgasbehälter vorgesehen. Des Weiteren muss ein Implantat oder Werkstock, nachdem dieses mit Plasma behandelt wurde, in aufwendiger Weise zum Patienten verbracht werden. Dabei ist insbesondere dafür Sorge zu tragen, dass eine mit Plasma aktivierte Oberfläche eines Implantats nicht wieder durch Berührung deaktiviert wird.

Erfindungsgemäß wird ein Implantat durch Verwendung eines transportablen und händisch von einer Person leicht bewegbaren Plasmageräts möglichst kurz vor der Implantation oder Implantierung in den menschlichen Körper mit Plasma behandelt. Erfindungsgemäß können so unmittelbar vor dem Einbringen des Implantats in den menschlichen Körper die Bedingungen für eine Anbindung an das organische Gewebe optimiert werden. So wird der Heilungsprozess ebenfalls optimiert. Ein transportables und einfach zu handhabendes Plasmagerät zur Verwendung in Operationssälen, an Behandlungsstühlen von Zahnärzten oder in zahntechnischen Laboren, ist hierfür besonders geeignet. Ein solches Plasmagerät ist relativ klein und handlich ausgestaltet und kann daher als leicht transportables Plasmagerät geführt werden. Des Weiteren können eventuell auf der Oberfläche vorhandene Mikroorganismen durch Ozon verringert oder ganz beseitigt werden, so dass der Heilungsprozess begünstigt wird.

Das Plasma könnte ohne externes Prozessgas und unter Atmosphärendruck erzeugt werden. Das Plasmagerät arbeitet vorteilhaft ohne externes Prozessgas unter Atmosphärendruck. Das Plasma könnte durch ein Multilayer-Piezoelement aus Luftsauerstoff gebildet werden und sich durch eine hohe Aktivierungseffizienz auszeichnen. Da das erzeugte Plasma partikelfrei ist, kann die Behandlung bzw. Funktionalisierung direkt vor der Einbringung des Implantats im Operationsbereich oder am Behandlungsstuhl erfolgen. Dies sorgt nicht nur dafür, dass die positiven Effekte der Plasmabehandlung voll zum Tragen kommen, sondern minimiert auch die Gefahr einer Rekontamination des Implantats.

Der Implantatstumpf eines Implantats könnte mit Plasma aktiviert werden. Hierdurch wird eine optimale Retention der Zementierung eines Aufsetzteils aus Zirkon oder allgemein aus einer Keramik bewirkt.

In der Zeichnung zeigen
- Fig. 1: ein Implantat, welches aus einem Kunststoff gefertigt ist, wobei ein Verankerungsabschnitt mit Verankerungskrallen versehen ist und wobei ein Implantatstumpf vorgesehen ist, auf dem ein Aufsetzteil befestigt werden kann,
- Fig. 2: ein Aufsetzteil, welches als Abutment ausgestaltet ist und einen Durchgang aufweist,
- Fig. 3: ein weiteres Aufsetzteil, welches als abgeschrägtes Abutment ausgestaltet ist und einen Durchgang aufweist,
- Fig. 4: ein weiteres Aufsetzteil, welches als längliches Abutment aus Zirkonoxid ausgestaltet ist und einen Durchgang aufweist,
- Fig. 5: ein weiteres Aufsetzteil, welches als kurzes Abutment aus Zirkonoxid ausgestaltet ist und einen Durchgang aufweist,
- Fig. 6: eine Querschnittansicht des Aufsetzteils gemäß Fig. 2, wobei vier äquidistant angeordnete Nocken gezeigt sind, welche radial nach innen abragen,
- Fig. 7: eine Längsschnittansicht des Aufsetzteils gemäß Fig. 2,
- Fig. 8: eine Querschnittansicht des Aufsetzteils gemäß Fig. 4, wobei vier äquidistant angeordnete, im Wesentlichen trapezförmige Nocken gezeigt sind, welche radial nach innen abragen,
- Fig. 9: eine Ansicht des Aufsetzteils gemäß Fig. 4, wobei innere Strukturen gestrichelt dargestellt sind,
- Fig. 10: eine Anordnung, welche ein Implantat und ein Aufsetzteil aufweist, wobei das Aufsetzteil im implantierten Zustand des Implantats knapp über dem Kieferknochen zementiert ist, und
- Fig. 11: eine Schnittansicht des Kerns eines Verankerungsabschnitts eines Implantats, wobei der Kern im Querschnitt elliptisch oder oval ausgebildet ist.

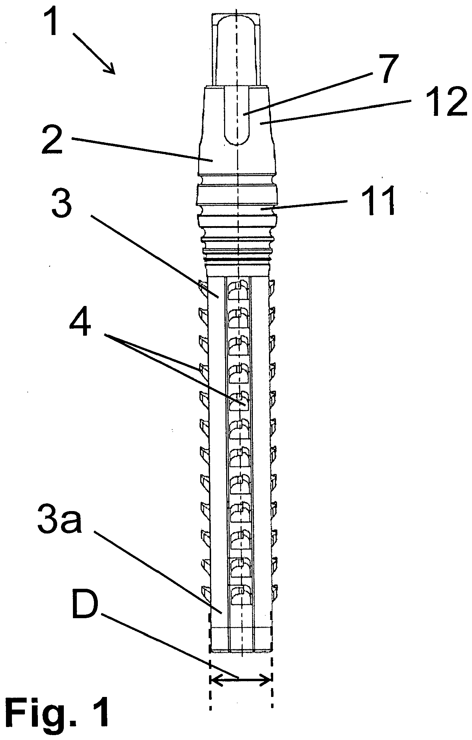

Fig. 1 zeigt ein Implantat 1, welches zum Implantieren in einen Kieferknochen 10 geeignet ist. Dieses Implantat 1 ist einstückig und materialeinheitlich aus einem Kunststoff, nämlich aus Polyetheretherketon, gefertigt.

Das Implantat 1 weist einen Implantatstumpf 2 auf, der ebenfalls aus dem zuvor vorgenannten Kunststoff gefertigt ist. Das Implantat 1 weist zudem einen Verankerungsabschnitt 3 auf, der auch aus dem zuvor genannten Kunststoff gefertigt ist.

Der Verankerungsabschnitt 3 ist mit Verankerungskrallen 4 versehen, die in radialer und axialer Richtung vom Implantat 1, nämlich von dessen Kern 3a, abragen. Ein Implantat 1 dieser Art ist in der DE 20 2014 004 751 U1 beschrieben.

Das in Fig. 1 gezeigte Implantat 1 weist einen Verankerungsabschnitt 3 mit einem Kern 3a auf, welcher einen Durchmesser D von 3 mm hat.

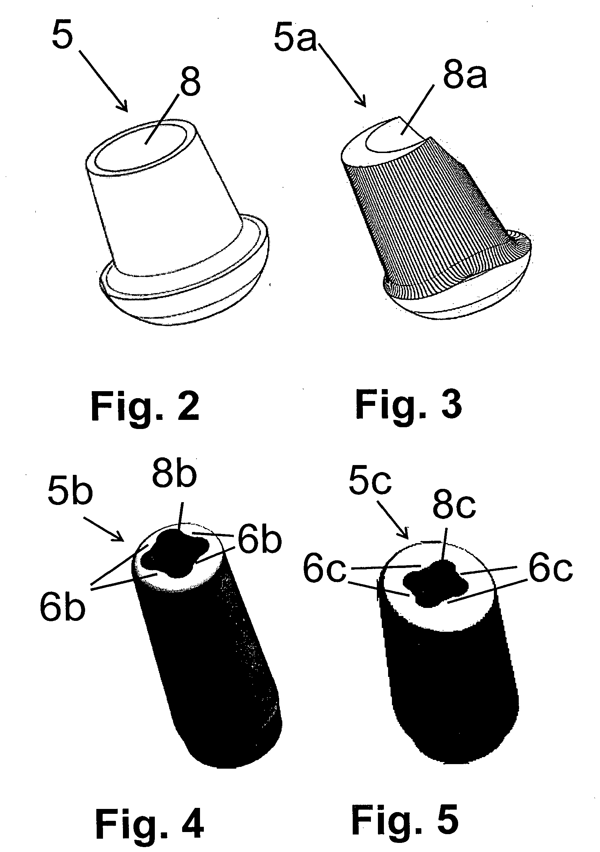

Die Fig. 2 bis 5 zeigen jeweils Aufsetzteile 5, 5a, 5b, 5c, welche zum Aufsetzen auf einen aus einem Kieferknochen 10 herausragenden Teil des Implantats 1 geeignet sind. Jedes Aufsetzteil 5, 5a, 5b, 5c ist auf dem Implantatstumpf 2 befestigbar. Jedes Aufsetzteil 5, 5a, 5b, 5c ist jeweils aus einem Werkstoff gefertigt, welcher biegesteifer als der Kunststoff ist, aus dem der Implantatstumpf 2 gefertigt ist.

Der Werkstoff, aus dem ein Aufsetzteil 5, 5a, 5b, 5c gefertigt ist oder den ein Aufsetzteil 5, 5a, 5b, 5c aufweist, ist ein Werkstoff auf Basis anorganischer Materialien.

Der Werkstoff, aus dem je ein Aufsetzteil 5, 5a, 5b, 5c gefertigt ist, ist eine Keramik. Der Werkstoff, aus dem je ein Aufsetzteil 5, 5a, 5b, 5c gefertigt ist, ist konkret ein Zirkoniumdioxid oder Zirkonoxid.

Jedes Aufsetzteil 5, 5a, 5b, 5c ist durch einen Klebstoff mit dem Implantatstumpf 2 verbindbar. Bevorzugt wird als Klebstoff ein Zement verwendet.

Jedes Aufsetzteil 5, 5a, 5b, 5c ist mit dem Implantatstumpf 2 formschlüssig verbindbar. In den Fig. 4 und 5 ist gezeigt, dass hierzu je ein Aufsetzteil 5b, 5c vier Nocken 6b, 6c aufweist, die in Nuten 7 des Implantatstumpfs 2 gemäß Fig. 1 formschlüssig eingreifen.

Jedes Aufsetzteil 5, 5a, 5b, 5c weist einen Durchgang 8, 8a, 8b, 8c auf, durch dessen obere Öffnung Zement oder Klebstoff oral abfließen kann. Die untere Öffnung ist durch den Implantatstumpf 2 derart verschlossen, dass kein Zement oder Klebstoff in den Kieferknochen hineinfließen kann.

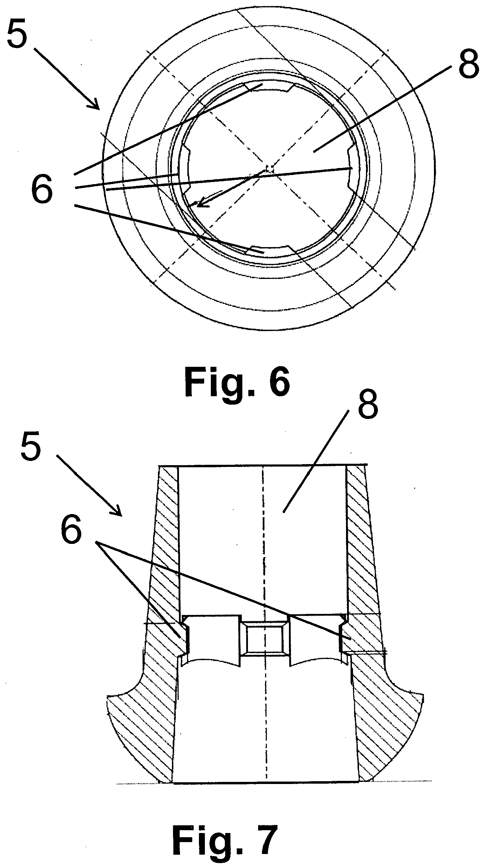

Fig. 6 zeigt eine Querschnittansicht des Aufsetzteils 5 gemäß Fig. 2, wobei vier äquidistant angeordnete Nocken 6 gezeigt sind, welche radial nach innen abragen. Die Schnittebene liegt in axialer Höhe der Nocken 6.

Fig. 7 zeigt eine Längsschnittansicht durch die Mittellängsachse des Aufsetzteils 5 gemäß Fig. 2. Hier ist gezeigt, dass sich ein Durchgang 8 von einer oberen Öffnung zu einer unteren Öffnung erstreckt. Im Bereich der oberen Öffnung und der unteren Öffnung ist der Durchgang 8 im Querschnitt kreisförmig.

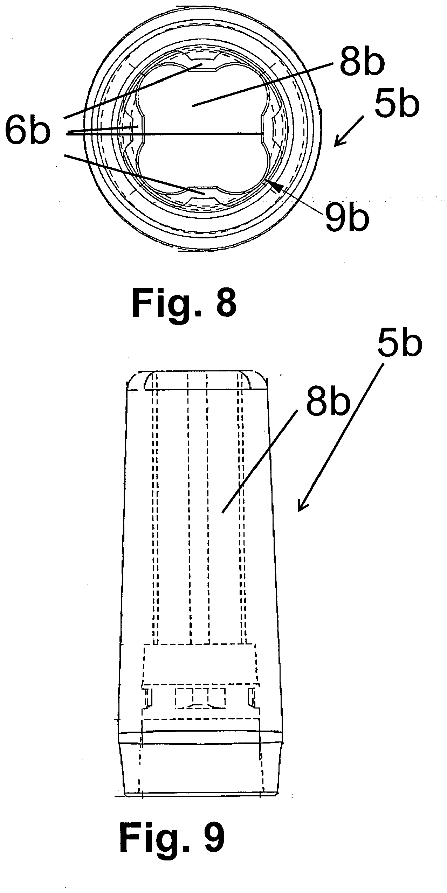

Fig. 8 zeigt eine Querschnittansicht des Aufsetzteils 5b gemäß Fig. 4, wobei vier äquidistant angeordnete, im Wesentlichen trapezförmige Nocken 6b gezeigt sind, welche radial nach innen abragen. Die Schnittebene liegt in axialer Höhe der Nocken 6b. Die Nocken 6b laufen beidseitig jeweils in kreisbogenförmige Kuhlen 9b aus. Es sind vier kreisbogenförmige Kuhlen 9b vorgesehen, die sich jeweils zwischen zwei Nocken 6b erstrecken.

Fig. 9 zeigt eine Ansicht des Aufsetzteils 5b gemäß Fig. 4, wobei innere Strukturen gestrichelt dargestellt sind. Der Durchgang 8b weist im Bereich der oberen Öffnung eine Querschnittsfläche auf, die durch die Nocken 6b und die kreisbogenförmigen Kuhlen 9b berandet wird.

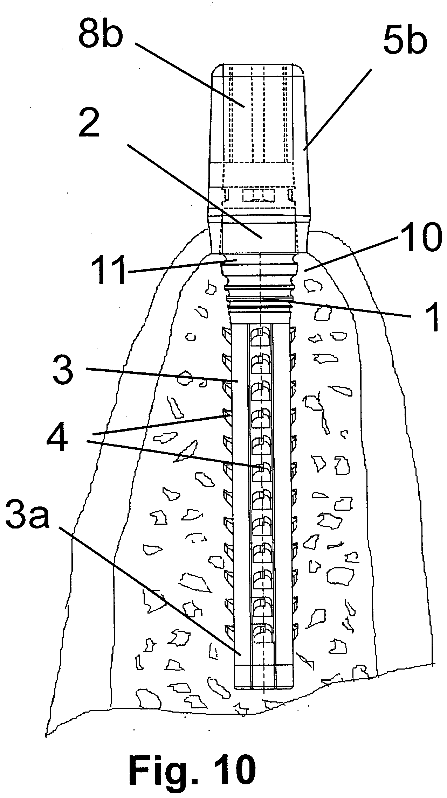

Fig. 10 zeigt eine Anordnung, umfassend ein Implantat 1, welches zum Implantieren in einen Kieferknochen 10 geeignet ist, und ein Aufsetzteil 5b, welches zum Aufsetzen auf einen aus dem Kieferknochen 10 herausragenden Teil des Implantats 1 geeignet ist, wobei das Implantat 1 aus einem Kunststoff gefertigt ist, wobei das Implantat einen Implantatstumpf 2 aufweist, der aus einem Kunststoff gefertigt ist, und wobei das Aufsetzteil 5b auf dem Implantatstumpf 2 befestigt oder befestigbar ist.

Das Aufsetzteil 5b ist aus einem Werkstoff gefertigt, welcher biegesteifer als der Kunststoff ist, aus dem der Implantatstumpf 2 gefertigt ist.

Der Werkstoff, aus dem das Aufsetzteil 5b gefertigt ist, ist ein Werkstoff auf Basis anorganischer Materialien. Der Werkstoff, aus dem das Aufsetzteil 5b gefertigt ist, ist eine Keramik. Konkret ist der Werkstoff, aus dem das Aufsetzteil 5b gefertigt ist, ein Zirkonoxid oder Zirkoniumdioxid. Zirkoniumdioxid wird auch als Zirkonoxid bezeichnet.

Das Aufsetzteil 5b ist durch einen Klebstoff mit dem Implantatstumpf 2 verbunden. Als Klebstoff wird ein Zement eingesetzt. Das Aufsetzteil 5b ist überdies mit dem Implantatstumpf 2 formschlüssig verbunden.

Dabei greifen die Nocken 6b in die Nuten 7 des Implantatstumpfs 2 formschlüssig ein. Flankenflächen 12, welche sich zwischen den Nuten 7 erstrecken und gegenüber den Nuten 7 in radialer Richtung erhaben ausgebildet sind, fluchten mit den kreisbogenförmigen Kuhlen 9b.

Das Implantat 1 ist materialeinheitlich und einstückig ausgebildet. Der Implantatstumpf 2 und der Verankerungsabschnitt 3 sind aus dem gleichen Kunststoff, nämlich Polyetheretherketon, gefertigt.

Das Implantat 1 weist mindestens eine Markierung 11 auf, welche anzeigt, wie weit das Implantat 1 in den Kieferknochen eingebracht werden soll oder wie tief der Implantatstumpf 2 in das Aufsetzteil 5c hineinragen soll.

Konkret ist gezeigt, dass das Aufsetzteil 5b 0,3 mm über dem Kieferknochen 10 zementiert ist.

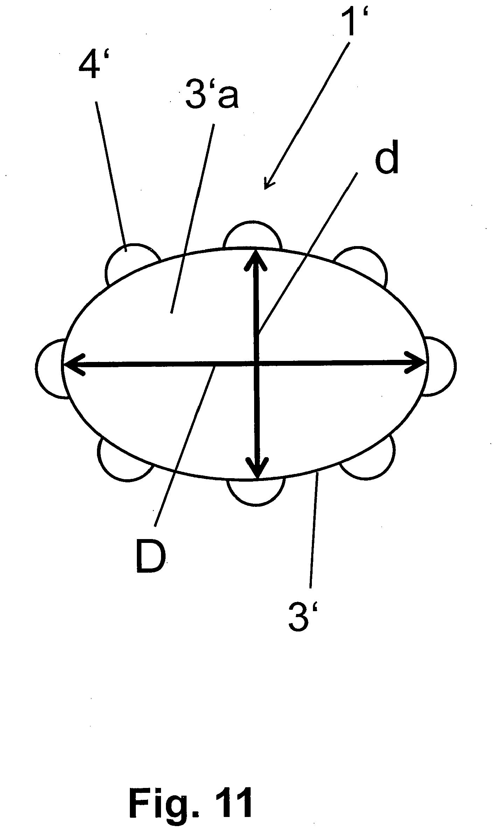

Fig. 11 zeigt in einer Schnittansicht ein Implantat 1', welches aus einem Kunststoff gefertigt ist oder einen Kunststoff aufweist. Es umfasst einen Verankerungsabschnitt 3' und einen nicht gezeigten Implantatstumpf, wobei der Verankerungsabschnitt 3' einen Kern 3'a aufweist und wobei vom Kern 3'a in radialer und axialer Richtung Verankerungskrallen 4' abragen. Der Kern 3'a ist im Querschnitt elliptisch ausgebildet und der Verankerungsabschnitt 3' ist durch ein Plasma behandelt.

Der Kern 3'a ist elliptisch ausgebildet, wobei der größte Durchmesser D 8 mm beträgt und wobei der kleinste Durchmesser d 4 mm beträgt. Das Implantat 1' ist aus Polyetheretherketon gefertigt. Das Implantat 1' kann in einer Anordnung der zuvor beschriebenen Art verwendet werden.

Ein Verfahren zur Behandlung eines Implantats 1, 1' der hier beschriebenen Art, umfasst die folgenden Verfahrensschritte:
Bereitstellen eines transportablen Plasmageräts,
Verbringen des zu aktivierenden Implantats 1, 1' vor eine Düse des Plasmageräts, wobei das Implantat 1, 1' von einem nicht metallischen Gegenstand gehalten wird, und
Benetzen des Implantats 1, 1' mit Plasma.

Das Plasma wird ohne externes Prozessgas und unter Atmosphärendruck erzeugt. Das Implantat 1, 1' wird vor eine Düse des Plasmageräts in einen Abstand von etwa 2 mm verbracht. Das Implantat 1, 1' wird ca. 10 bis 15 Sekunden pro Quadratzentimeter benetzt. Die Oberfläche darf nun nicht mehr berührt werden, weder mit Handschuhen noch mit der bloßen Hand. Eine Weiterverarbeitung des Implantats 1, 1' wie beispielsweise eine Implantation oder ein Auftragen einer ersten Opakerschicht kann innerhalb der ersten Minuten nach der Aktivierung der Oberfläche erfolgen.

Die Behandlung des Implantats 1, 1' kann bei einer geringen Temperatur von rund 45° C erfolgen. Es kommt daher durch die Behandlung mit dem Plasmagerät zu keiner thermischen Belastung des Kunststoffs oder Beeinträchtigung der Maßhaltigkeit des Implantats 1, 1'.

Die Verwendung eines leichten Plasmageräts ermöglicht sowohl einen Einsatz durch technisch weniger versierte Personen als auch eine für Anwender und Patienten sichere Handhabung. Dazu trägt auch die geringe Versorgungsspannung von 12 Volt bei.

Zur Plasmaerzeugung hat die Firma relyon plasma die sogenannte PDD®-Technologie entwickelt. Diese Technologie basiert auf der direkten elektrischen Entladung an einem offen betriebenen piezoelektrischen Transformator.

Mit höchster Effizienz wird eine niedrige Eingangsspannung so transformiert, dass sehr hohe elektrische Feldstärken aufgebaut werden, und so das umgebende Prozessgas, typischerweise Luft, dissoziiert und ionisiert wird.

Die Gastemperatur im Plasmavolumen liegt bei dieser Technologie typischerweise bei Umgebungstemperatur, nämlich bei 300+20 K. Es werden Elektronendichten von ca. 1014 und 1016 m-3 erreicht.

Damit liefert diese Technologie ein typisches kaltes Nichtgleichgewichtsplasma.

## Patentansprüche

1. Anordnung, umfassend ein Implantat (1, 1'), welches aus einem Kunststoff gefertigt ist oder einen Kunststoff aufweist, umfassend einen Verankerungsabschnitt (3, 3') und einen Implantatstumpf (2), wobei der Verankerungsabschnitt (3, 3') einen Kern (3a, 3'a) aufweist und wobei vom Kern (3a, 3'a) in radialer und/oder axialer Richtung Verankerungskrallen (4, 4') abragen, welches Implantat (1, 1') zum Implantieren in einen Kieferknochen (10) geeignet ist, und ein Aufsetzteil (5, 5a, 5b, 5c), welches zum Aufsetzen auf einen aus dem Kieferknochen (10) herausragenden Teil des Implantats (1, 1') geeignet ist, wobei das Implantat (1, 1') einen Implantatstumpf (2) aufweist, der aus einem Kunststoff gefertigt ist oder einen Kunststoff aufweist, und wobei das Aufsetzteil (5, 5a, 5b, 5c) auf dem Implantatstumpf (2) befestigt oder befestigbar ist, **dadurch gekennzeichnet, dass** der Kern (3'a) im Querschnitt elliptisch oder oval ausgebildet ist, dass der Implantatstumpf (2) im Querschnitt elliptisch oder oval ausgebildet ist, dass das Aufsetzteil (5, 5a, 5b, 5c) Nocken (6, 6b, 6c) aufweist, die in Nuten (7) des Implantatstumpfs (2) formschlüssig eingreifen, und dass das Aufsetzteil (5, 5a, 5b, 5c) aus einem Werkstoff gefertigt ist oder einen Werkstoff aufweist, welcher biegesteifer als der Kunststoff ist, aus dem der Implantatstumpf (2) gefertigt ist oder den der Implantatstumpf (2) aufweist.

2. Anordnung nach Anspruch 1, **dadurch gekennzeichnet, dass** der Kern (3'a) elliptisch ausgebildet ist, wobei der größte Durchmesser (D) im Bereich 3 bis 9 mm und der kleinste Durchmesser (d) im Bereich 2 bis 6 mm liegt.

3. Anordnung nach Anspruch 1 oder 2, **dadurch gekennzeichnet, dass** es aus Polyetheretherketon gefertigt ist.

4. Anordnung nach einem der voranstehenden Ansprüche **dadurch gekennzeichnet, dass** der Implantatstumpf (2) durch ein Plasma behandelt ist.

5. Anordnung nach einem der voranstehenden Ansprüche **dadurch gekennzeichnet, dass** der Verankerungsabschnitt (3, 3') durch ein Plasma behandelt ist.

6. Anordnung nach einem der voranstehenden Ansprüche, **dadurch gekennzeichnet, dass** der Werkstoff, aus dem das Aufsetzteil (5, 5a, 5b, 5c) gefertigt ist oder den das Aufsetzteil (5, 5a, 5b, 5c) aufweist, ein Werkstoff auf Basis anorganischer Materialien ist.

7. Anordnung nach einem der voranstehenden Ansprüche , **dadurch gekennzeichnet, dass** der Werkstoff, aus dem das Aufsetzteil gefertigt ist oder den das Aufsetzteil aufweist, ein Metall oder eine Metalllegierung ist.

8. Anordnung nach einem der voranstehenden Ansprüche 1 bis 6 , **dadurch gekennzeichnet, dass** der Werkstoff, aus dem das Aufsetzteil (5, 5a, 5b, 5c) gefertigt ist oder den das Aufsetzteil (5, 5a, 5b, 5c) aufweist, eine Keramik ist.

9. Anordnung nach einem der voranstehenden Ansprüche 1 bis 6 oder 8, **dadurch gekennzeichnet, dass** der Werkstoff, aus dem das Aufsetzteil (5, 5a, 5b, 5c) gefertigt ist oder den das Aufsetzteil (5, 5a, 5b, 5c) aufweist, ein Zirkonoxid ist.

10. Anordnung nach einem der voranstehenden Ansprüche, **dadurch gekennzeichnet, dass** das Aufsetzteil (5, 5a, 5b, 5c) durch einen Klebstoff mit dem Implantatstumpf (2) verbunden ist.

11. Anordnung nach einem der voranstehenden Ansprüche, **dadurch gekennzeichnet, dass** das Aufsetzteil (5, 5a, 5b, 5c) mit dem Implantatstumpf (2) formschlüssig verbunden ist.

12. Anordnung nach einem der voranstehenden Ansprüche, **dadurch gekennzeichnet, dass** das Aufsetzteil (5, 5a, 5b, 5c) mit dem Implantatstumpf (2) verschraubt ist.

13. Anordnung nach einem der vorstehenden Ansprüche, **dadurch gekennzeichnet, dass** das Aufsetzteil (5, 5a, 5b, 5c) einen Durchgang (8, 8a, 8b, 8c) aufweist.

14. Anordnung nach einem der voranstehenden Ansprüche, **dadurch gekennzeichnet, dass** das Implantat (1, 1') materialeinheitlich und einstückig ausgebildet ist, nämlich der Implantatstumpf (2) und ein Verankerungsabschnitt (3, 3') aus dem gleichen Kunststoff gefertigt sind.

15. Anordnung nach einem der voranstehenden Ansprüche, **dadurch gekennzeichnet, dass** das Implantat (1, 1') mindestens eine Markierung (11) aufweist, welche anzeigt, wie weit das Implantat (1, 1') in den Kieferknochen (10) eingebracht werden soll oder wie tief der Implantatstumpf (2) in das Aufsetzteil (5, 5a, 5b, 5c) hineinragen soll.

16. Verfahren zur Behandlung eines Implantats (1, 1') einer Anordnung nach einem der voranstehenden Ansprüche, umfassend die folgenden Verfahrensschritte:
Bereitstellen eines transportablen Plasmageräts,
Verbringen des zu aktivierenden Implantats (1, 1') vor eine Düse des Plasmageräts, wobei das Implantat (1, 1') von einem nicht metallischen Gegenstand gehalten wird, und
Benetzen des Implantats (1, 1') mit Plasma.

17. Verfahren nach Anspruch 16, **dadurch gekennzeichnet, dass** das Plasma ohne externes Prozessgas und unter Atmosphärendruck erzeugt wird.

## Claims

1. Arrangement comprising an implant (1, 1') which is made from a plastic or comprises a plastic, comprising an anchoring segment (3, 3') and an implant stub (2), wherein the anchoring segment (3, 3') comprises a core (3a, 3'a) and wherein anchoring claws (4, 4') protrude from the core (3a, 3'a) in a radial and/or axial direction, which implant (1, 1') is suitable for implantation into a jaw bone (10), and a mounting part (5, 5a, 5b, 5c) which is suitable for mounting onto a part of the implant (1, 1') that is protruding out of the jaw bone (10),
wherein the implant (1, 1') comprises an implant stub (2) which is made from a plastic or comprises a plastic, and wherein the mounting part (5, 5a, 5b, 5c) is fixed or fixable on the implant stub (2), **characterized in that**
the core (3'a) is elliptic or oval in cross section, **in that** the implant stub (2) is elliptic or oval in cross section, **in that** the mounting part (5, 5a, 5b, 5c) comprises cams (6, 6b, 6c) which engage in grooves (7) of the implant stub (2) in an interlocking manner, and **in that** the mounting part (5, 5a, 5b, 5c) is made from a material or comprises a material that is more rigid than the plastic from which the implant stub (2) is made or which the implant stub (2) comprises.

2. Arrangement according to Claim 1, **characterized in that** the core (3'a) is elliptic, the maximum diameter (D) being within the range from 3 to 9 mm and the minimum diameter (d) being within the range from 2 to 6 mm.

3. Arrangement according to Claim 1 or 2, **characterized in that** it is made from polyether ether ketone.

4. Arrangement according to any of the preceding claims, **characterized in that** the implant stub (2) has been treated by a plasma.

5. Arrangement according to any of the preceding claims, **characterized in that** the anchoring segment (3, 3') has been treated by a plasma.

6. Arrangement according to any of the preceding claims, **characterized in that** the material from which the mounting part (5, 5a, 5b, 5c) is made or which the mounting part (5, 5a, 5b, 5c) comprises is a material based on inorganic materials.

7. Arrangement according to any of the preceding claims, **characterized in that** the material from which the mounting part is made or which the mounting part comprises is a metal or a metal alloy.

8. Arrangement according to any of the preceding Claims 1 to 6, **characterized in that** the material from which the mounting part (5, 5a, 5b, 5c) is made or which the mounting part (5, 5a, 5b, 5c) comprises is a ceramic.

9. Arrangement according to any of the preceding Claims 1 to 6 or 8, **characterized in that** the material from which the mounting part (5, 5a, 5b, 5c) is made or which the mounting part (5, 5a, 5b, 5c) comprises is a zirconium oxide.

10. Arrangement according to any of the preceding claims, **characterized in that** the mounting part (5, 5a, 5b, 5c) is connected to the implant stub (2) by means of an adhesive.

11. Arrangement according to any of the preceding claims, **characterized in that** the mounting part (5, 5a, 5b, 5c) is connected to the implant stub (2) in an interlocking manner.

12. Arrangement according to any of the preceding claims, **characterized in that** the mounting part (5, 5a, 5b, 5c) is screwed to the implant stub (2).

13. Arrangement according to any of the preceding claims, **characterized in that** the mounting part (5, 5a, 5b, 5c) comprises a passage (8, 8a, 8b, 8c).

14. Arrangement according to any of the preceding claims, **characterized in that** the implant (1, 1') is formed from one material and as one piece, namely the implant stub (2) and an anchoring segment (3, 3') are made from the same plastic.

15. Arrangement according to any of the preceding claims, **characterized in that** the implant (1, 1') comprises at least one marking (11) indicating how far the implant (1, 1') is to be introduced into the jaw bone (10) or how deep the implant stub (2) is to protrude into the mounting part (5, 5a, 5b, 5c).

16. Method for treating an implant (1, 1') of an arrangement according to any of the preceding claims, comprising the following method steps:
providing a transportable plasma instrument,
bringing the implant (1, 1') to be activated in front of a nozzle of the plasma instrument, the implant (1, 1') being held by a non-metallic object, and
wetting the implant (1, 1') with plasma.

17. Method according to Claim 16, **characterized in that** the plasma is generated without external process gas and under atmospheric pressure.

## Revendications

1. Agencement comprenant un implant (1, 1') qui est fabriqué à partir d'un plastique ou qui présente un plastique, comprenant une portion d'ancrage (3, 3') et un bout d'implant (2), la portion d'ancrage (3, 3') présentant un noyau (3a, 3'a) et des griffes d'ancrage (4, 4') faisant saillie dans la direction radiale et/ou axiale depuis le noyau (3a, 3'a), lequel implant (1, 1') est apte à être implanté dans un os maxillaire (10), et une partie de pose (5, 5a, 5b, 5c) qui est apte à être placée sur une partie de l'implant (1, 1') faisant saillie hors de l'os maxillaire (10), l'implant (1, 1') présentant un bout d'implant (2) qui est fabriqué à partir d'un plastique ou qui présente un plastique, et la partie de pose (5, 5a, 5b, 5c) étant au pouvant être fixée sur le bout d'implant (2), **caractérisé en ce que** le noyau (3'a) est réalisé en section transversale sous forme elliptique ou ovale, **en ce que** le bout d'implant (2) est réalisé en section transversale sous forme elliptique ou ovale, **en ce que** la partie de pose (5, 5a, 5b, 5c) présente des cames (6, 6b, 6c) qui s'engagent par engagement par correspondance de formes dans des rainures (7) du bout d'implant (2), et **en ce que** la partie de pose (5, 5a, 5b, 5c) est fabriqué en un matériau ou présente un matériau qui est plus rigide en flexion que le plastique à partir duquel le bout d'implant (2) est fabriqué ou que présente le bout d'implant (2).

2. Agencement selon la revendication 1, **caractérisé en ce que** le noyau (3'a) est réalisé sous forme elliptique, le plus grand diamètre (D) étant de l'ordre de 3 à 9 mm et le plus petit diamètre (d) étant de l'ordre de 2 à 6 mm.

3. Agencement selon la revendication 1 ou 2, **caractérisé en ce qu'**il est fabriqué à partir de polyétheréthercétone.

4. Agencement selon l'une quelconque des revendications précédentes, **caractérisé en ce que** le bout d'implant (2) est traité par un plasma.

5. Agencement selon l'une quelconque des revendications précédentes, **caractérisé en ce que** la portion d'ancrage (3, 3') est traitée par un plasma.

6. Agencement selon l'une quelconque des revendications précédentes, **caractérisé en ce que** le matériau à partir duquel la partie de pose (5, 5a, 5b, 5c) est fabriquée ou que présente la partie de pose (5, 5a, 5b, 5c) est un matériau à base de matières inorganiques.

7. Agencement selon l'une quelconque des revendications précédentes, **caractérisé en ce que** le matériau à partir duquel la partie de pose est fabriquée ou que présente la partie de pose est un métal ou un alliage de métaux.

8. Agencement selon l'une quelconque des revendications précédentes 1 à 6, **caractérisé en ce que** le matériau à partir duquel la partie de pose (5, 5a, 5b, 5c) est fabriquée ou que présente la partie de pose (5, 5a, 5b, 5c) est une céramique.

9. Agencement selon l'une quelconque des revendications précédentes 1 à 6 ou 8, **caractérisé en ce que** le matériau à partir duquel la partie de pose (5, 5a, 5b, 5c) est fabriquée ou que présente la partie de pose (5, 5a, 5b, 5c) est une zircone.

10. Agencement selon l'une quelconque des revendications précédentes, **caractérisé en ce que** la partie de pose (5, 5a, 5b, 5c) est reliée au bout d'implant (2) par un adhésif.

11. Agencement selon l'une quelconque des revendications précédentes, **caractérisé en ce que** la partie de pose (5, 5a, 5b, 5c) est reliée au bout d'implant (2) par engagement par correspondance de formes.

12. Agencement selon l'une quelconque des revendications précédentes, **caractérisé en ce que** la partie de pose (5, 5a, 5b, 5c) est vissée au bout d'implant (2).

13. Agencement selon l'une quelconque des revendications précédentes, **caractérisé en ce que** la partie de pose (5, 5a, 5b, 5c) présente un passage (8, 8a, 8b, 8c).

14. Agencement selon l'une quelconque des revendications précédentes, **caractérisé en ce que** l'implant (1, 1') est réalisé sous forme venue de matière et d'une seule pièce, autrement dit le bout d'implant (2) et une portion d'ancrage (3, 3') sont fabriqués à partir du même plastique.

15. Agencement selon l'une quelconque des revendications précédentes, **caractérisé en ce que** l'implant (1, 1') présente au moins un marquage (11) qui indique jusqu'où l'implant (1, 1') doit être introduit dans l'os maxillaire (10) ou jusqu'à quelle profondeur le bout d'implant (2) doit pénétrer à l'intérieur de la partie de pose (5, 5a, 5b, 5c).

16. Procédé de traitement d'un implant (1, 1') d'un agencement selon l'une quelconque des revendications précédentes, comprenant les étapes de procédé suivantes :
fourniture d'un appareil à plasma transportable, apport de l'implant (1, 1') à activer devant une buse de l'appareil à plasma, l'implant (1, 1') étant retenu par un objet non métallique, et
mouillage de l'implant (1, 1') avec du plasma.

17. Procédé selon la revendication 16, **caractérisé en ce que** le plasma est généré sans gaz de processus externe et sous une pression atmosphérique.
